## Europäisches Patentamt
## European Patent Office
## Office européen des brevets

(19)

(11) Veröffentlichungsnummer: **0 241 740**
**B1**

(12) # EUROPÄISCHE PATENTSCHRIFT

(45) Veröffentlichungstag der Patentschrift:
**15.03.89**

(51) Int. Cl.⁴: **C03B 7/22**

(21) Anmeldenummer: **87103929.3**

(22) Anmeldetag: **18.03.87**

(54) **Vorrichtung zur Entnahme von geschmolzenem Glas aus einer Schmelze.**

(30) Priorität: **12.04.86 DE 3612390**

(43) Veröffentlichungstag der Anmeldung:
**21.10.87 Patentblatt 87/43**

(45) Bekanntmachung des Hinweises auf die Patenterteilung:
**15.03.89 Patentblatt 89/11**

(84) Benannte Vertragsstaaten:
**AT BE CH DE ES FR GB GR IT LI LU NL SE**

(56) Entgegenhaltungen:
**DE-A- 2 031 054**

(73) Patentinhaber: **J. WALTER CO. MASCHINEN GMBH,
Gewerbegebiet Steinberg, D-8641 Wilhelmsthal(DE)**

(72) Erfinder: **Rose, Dieter, Dörfles 9, D-8640 Kronach(DE)**
Erfinder: **Bassing, Werner, Am Steig 13,
D-8641 Marktrodach(DE)**

(74) Vertreter: **LOUIS, PÖHLAU, LOHRENTZ & SEGETH,
Kesslerplatz 1 Postfach 3055, D-8500 Nürnberg(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zur Entnahme von geschmolzenem Glas aus einer Schmelze, die durch eine Wandung mit einem Stichloch von einer Verarbeitungsstelle getrennt ist, und zum Transport des geschmolzenen Glases zur Verarbeitungsstelle, mit einer durch das Stichloch bewegbaren und mit ihrem Vorderende in die Schmelze eintauchbaren Lanze, die über ein erstes Gelenk an einem Verbindungselement einer Bewegungseinrichtung angeordnet ist, wobei das Verbindungselement mit einem vom ersten Gelenk beabstandeten zweiten Gelenk an der Bewegungseinrichtung gelagert ist, und die beiden Gelenke parallele horizontale Achsen aufweisen.

Eine derartige Vorrichtung ist aus Glass Technology Vol. 23 No. 2. April 1982, Seiten 80 bis 89 bekannt. Dort wird unter Bezugnahme auf Figur 7 eine Vorrichtung zur Entnahme von geschmolzenem Glas aus einer Schmelze beschrieben, bei der die in die Schmelze eintauchbare Lanze über ein erstes Gelenk an einem Verbindungselement einer Bewegungseinrichtung angeordnet ist. Das Verbindungselement ist mit einem zweiten Gelenk an der Bewegungseinrichtung gelagert. Sowohl das erste als auch das zweite Gelenk sind dort um zueinander parallele horizontale Achsen verschwenkbar, wobei der Verschwenkungswinkel der Lanze relativ zum Verbindungselement, bzw. des Verbindungselementes relativ zur Bewegungseinrichtung begrenzt ist. Durch diese beiden begrenzten Verschwenkungswinkel ist die Höhe der vom Stichloch entfernten Verarbeitungsstelle in Bezug zur Oberfläche der Schmelze auf einen relativ kleinen Bereich begrenzt. Ein weiterer Mangel dieser bekannten Vorrichtung besteht darin, dass das Verbindungselement in Bezug zur Bewegungseinrichtung außer der beschriebenen Schwenkbewegung auch eine translatorische Bewegung ausführen muß, um mit Hilfe der Lanze aus der Glasschmelze eine bestimmte Glasmenge entnehmen zu können, bzw. den sog. Abtropfbereich, innerhalb welchem mindestens eine Verarbeitungsstelle angeordnet ist, nicht auf einen zu kleinen Flächenbereich zu begrenzen. Bei derartigen Vorrichtungen sind Konstruktionselemente, die sich translatorisch bewegen deshalb von Nachteil, weil die Einzelteile dieser Vorrichtungen relativ hohen durch die Glasschmelze bedingten Temperaturen ausgesetzt sein können, so daß eine Rostbildung, eine Verzunderung od. dgl. nicht sicher verhindert werden kann. Konstruktionselemente, die gegeneinander nur eine Schwenkbewegung ausführen, sind deshalb unproblematischer, weil sie gegen die Einwirkung erhöhter Temperaturen durch einfach aufgebaute Abschirmungen besser geschützt werden können als Konstruktionsteile, die gegeneinander eine translatorische Bewegung ausführen.

Bei der oben beschriebenen bekannten Vorrichtung der gattungsgemäßen Art sind die Schwenkwinkel der Lanze und des Verbindungselementes insbesondere auch dadurch begrenzt, daß die Lanze und das Verbindungselement in einer gemeinsamen vertikalen Ebene verschwenkbar sind, so daß ab einem bestimmten Grenzwinkel das Konstruktionsteil, an welchem die Lanze angeordnet ist, mit dem Konstruktionsteil, an dem das Verbindungselement angeordnet ist, kollidiert.

Aus der DE-AS 2 905 767 der Anmelderin ist eine gattungsgemäße Vorrichtung zur Entnahme von geschmolzenem Glas aus einer Schmelze bekannt, bei der die Lanze um ein Gelenk schwenkbar und in radialer Richtung des Gelenkes translatorisch bewegbar ist.

Der vorliegenden Erfindung liegt nun die Aufgabe zugrunde, eine Vorrichtung der eingangs genannten Art zu schaffen, bei der translatorische Bewegungen zwischen benachbarten Konstruktionsteilen der Vorrichtung vermieden werden, und mit welcher bei einem einfachen Aufbau der Vorrichtung mit der Lanze ein relativ großer Abtropfbereich überstrichen werden kann, innerhalb welchem die Verarbeitungsstelle anordenbar ist.

Diese Aufgabe wird erfindungsgemäß durch die Merkmale des Anspruchs 1 gelöst, wobei die beiden Gelenke der Bewegungseinrichtung zur ungehinderten Ausführung einer Schwenkbewegung der Lanze um die horizontale Achse des ersten Gelenkes und des Verbindungselementes um das zweite Gelenk in Richtung ihrer horizontalen Achsen gegeneinander derart versetzt sind, daß die Stange in einer ersten vertikalen Ebene und das Verbindungselement in einer davon beabstandeten zweiten vertikalen Ebene verschwenkbar sind. Durch diese Anordnung der Lanze und des Verbindungselementes nach Art eines Kurbeltriebes ist es möglich, die Lanze sowohl durch ein vergleichsweise kleinflächiges Stichloch in die Glasschmelze einzutauchen, als auch die Lanze durch das Stichloch aus der Schmelze heraus zu einer Verarbeitungsstelle zu bewegen, wobei die Verarbeitungsstelle innerhalb eines vergleichsweise großflächigen Abtropfbereiches angeordnet sein kann. Dadurch, daß die erfindungsgemäße Vorrichtung nur zwei Gelenke aufweist, um welche die Lanze bzw. das Verbindungselement verschwenkbar sind, werden translatorische Bewegungen zwischen Konstruktionsteilen vermieden, so daß die Standzeit im Vergleich zu einer bekannten Vorrichtung der gattungsgemäßen Art wesentlich erhöht ist, weil eine Verzunderung, Rostbildung od. dgl. der sich gegeneinander bewegenden Konstruktionsteile vermieden werden kann. Weitere Vorteile der erfindungsgemässen Vorrichtung bestehen in ihrem einfachen Aufbau, in der einfachen Steuerbarkeit des Verbindungselementes bzw. der mit dem Verbindungselement gelenkig verbundenen Lanze und vor allem darin, dass die sich gegeneinander bewegenden Konstruktionsteile mit einer Kapselung ausgebildet sein können, die einen Schutz gegen Verschmutzung und somit eine Möglichkeit zur problemlosen Schmierung bildet. Erfindungsgemäß ist es in vorteilhafter Weise auch möglich, die Verarbeitungsstelle über dem Stichloch anzuordnen, wobei die Lanze dennoch einen ausreichend nach unten geneigten Winkel aufweist, damit das geschmolzene Glas von der Spitze der Lanze abtropfen kann. Ausserdem kann in vorteilhafter Weise bei extrem niedriger Oberfläche der Glasschmelze eine bei der bekannten Vorrichtung der gattungsgemässen Art erforderliche, in der vertikalen Richtung in ihrer Länge translatorisch veränderbare Achse entfallen, die zur Speisung von Verarbeitungsstellen erforderlich wäre, die sich über der Oberfläche der Glasschmelze befinden. Durch geeignete Steuerung des Verbindungselementes und der Lanze ist es auch möglich, daß die Spitze der Lanze während des Abtropfens des Glases durch geeignete Winkelbewegungen der beiden Gelenke eine translatorische Bewegung ausführt, was insbesondere für die Herstellung länglicher Glasgegenstände von Wichtigkeit ist. Der Wartungsaufwand, die Kosten und die Störanfälligkeit der Vorrichtung reduzieren sich im Verhältnis der insgesamt vorhandenen Achsen.

Es hat sich als zweckmässig erwiesen, daß das zweite Gelenk an einer Halterung vor und über oder unter dem in der Wandung vorgesehenen Stichloch angeordnet ist. Die Anordnung des zweiten Gelenkes über dem Stichloch ist insbesondere dann von Vorteil, wenn die Verarbeitungsstelle über der Oberfläche der Glasschmelze angeordnet ist.

Bei einer Ausbildung der erfindungsgemäßen Vorrichtung kann die Halterung für das zweite Gelenk ortsfest angeordnet sein. In diesem Fall wird der Abtropfbereich der Lanze durch die Länge der Lanze und durch die Länge des Verbindungselementes sowie durch den Abstand der Halterung von der Wandung allein bestimmt.

Bei einer anderen Ausbildung der erfindungsgemäßen Vorrichtung kann die Halterung gegenüber dem Stichloch verschiebbar sein. Durch eine derartige Verschiebbarkeit der Halterung vom Stichloch weg bzw. zum Stichloch hin, wird der maximal mögliche Abtropfbereich um das Maß vergrößert, um welches die Halterung linear verschiebbar ist.

Die Halterung der erfindungsgemäßen Vorrichtung kann auch um eine vertikale Achse drehbar sein. Selbstverständlich ist es auch möglich, daß die Halterung sowohl linear verschiebbar als auch um eine vertikale Achse drehbar ist. Im zuletzt genannten Fall ist der Abtropfbereich am größten, so daß es auch möglich ist, einem Stichloch mehrere Bearbeitungsstellen zuzuordnen, die beispielsweise in Form eines Revolvermagazins angeordnet sind.

Es hat sich als zweckmäßig erwiesen, daß zum Verschwenken der Lanze relativ zum Verbindungselement ein an diesem angeordneter Antriebsmotor dient. Das Verbindungselement kann dabei gleichzeitig als Abschirmung für den zuletzt genannten Antriebsmotor dienen, so daß dieser Antriebsmotor gegen die aus dem Stichloch austretende Strahlungshitze geschützt ist. Ein weiterer Vorteil des am Verbindungselement angeordneten Antriebsmotors zum Verschwenken der Lanze relativ gegen das Verbindungselement besteht darin, daß die drehmomentübertragende Verbindung zwischen dem Antriebsmotor und der Lanze kurz und das dynamische Verhalten zwischen der Lanze und dem ihr zugeordneten Antriebsmotor gut ist.

Die Lanze kann um ihre Längsachse rotierend ausgebildet sein. Zum Drehen der Lanze um ihre Längsachse kann ein zweiter Antriebsmotor dienen, der am Verbindungselement angeordnet ist. Durch diese Anordnung ist auch der Antriebsmotor zum Drehen der Lanze um ihre Längsachse gegen die aus dem Stichloch abgestrahlte Wärmestrahlung geschützt. Durch eine derartige Ausbildung der erfindungsgemäßen Vorrichtung ergibt sich also außer einem guten dynamischen Verhalten, das einfach steuerbar ist, auch der Vorteil einer langen Standzeit der Vorrichtung, so daß der Wartungsaufwand auf ein Minimum reduziert ist.

Zum Verschwenken des Verbindungselementes relativ zur Halterung ist vorzugsweise ein dritter Antriebsmotor vorgesehen. Dieser dritte Antriebsmotor ist vorzugsweise an der Halterung montiert, wobei auch dieser dritte Antriebsmotor durch ein geeignet ausgebildetes Verbindungselement gegen die aus dem Stichloch austretende Wärmestrahlung geschützt werden kann.

Weitere Einzelheiten, Merkmale und Vorteile ergeben sich aus der nachfolgenden Beschreibung einer bevorzugten Ausführungsform der erfindungsgemäßen Vorrichtung. Es zeigen:

Fig. 1 eine Seitenansicht der Vorrichtung, wobei die Wandung mit dem Stichloch und der Glasschmelze sowie eine Verarbeitungsstelle geschnitten und abschnittweise dargestellt sind,

Fig. 2 eine Draufsicht auf die Vorrichtung gemäß Figur 1, wobei die Wandung des Glasschmelzofens und die Verarbeitungsstelle abschnittweise dargestellt sind, und

Fig. 3 eine schematische Darstellung der Vorrichtung gemäß Figur 1, aus der eine Bewegungsbahn der Spitze der Lanze zwischen der Glasschmelze und einer Verarbeitungsstelle, sowie der gesamte maximal mögliche Abtropfbereich der Spitze der Lanze dargestellt ist.

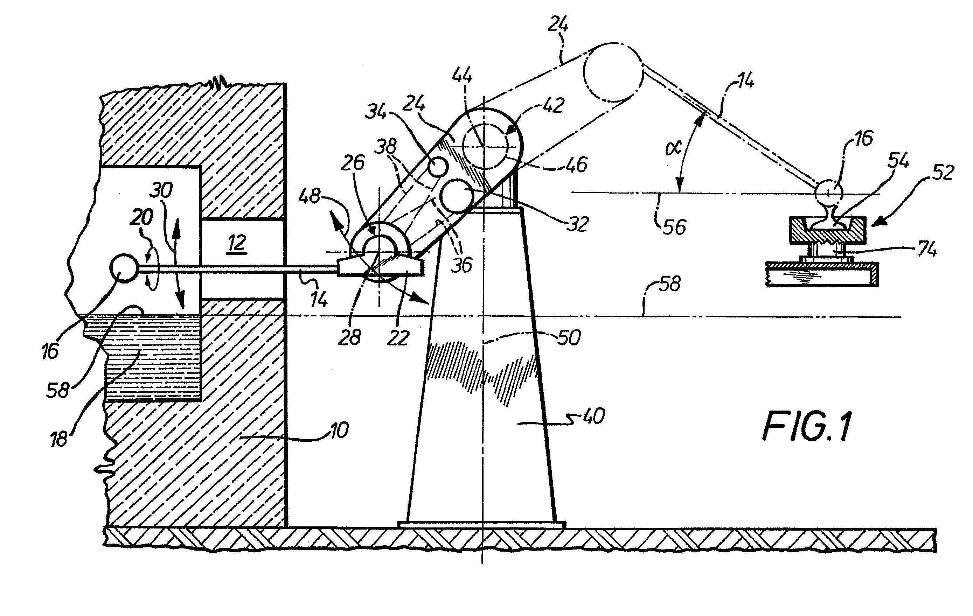

Figur 1 zeigt eine abschnittweise dargestellte Wandung 10 eines Glasschmelzofens mit einem Stichloch 12, durch das Lanze 14 mit ihrer kugelförmigen Spitze 16 in die im Glasschmelzofen vorhandene Glasschmelze 18 eingetaucht wird. In dieser Figur ist die Lanze in einer horizontalen Stellung im nicht eingetauchten Zustand dargestellt. Die Lanze 14 ist um ihre Längsachse drehbar, was durch den Doppelpfeil 20 angedeutet ist. Mit ihrem zur Spitze 16 entgegengesetzten Endabschnitt ist die Lanze 14 in einem Befestigungsteil 22 angeordnet, das mit einem Befestigungselement 24 mittels eines ersten Gelenkes 26 verbunden ist. Das Gelenk 26 weist eine horizontale Achse 28 auf, so daß die Lanze 14 um das Verbindungselement 24 in Richtung des Doppelpfeiles 30 um eine vertikale Ebene verschwenkbar ist. Zum Verschwenken der Lanze 14 um die horizontale Achse 28 ist ein erster Antriebsmotor 32 vorgesehen, der am Verbindungselement 24 angeordnet und durch das Verbindungselement 24 gegen Wärmestrahlungen abgeschirmt ist, die aus dem Stichloch 14 austreten. Zum Drehen der Lanze 14 um ihre Längsachse dient ein zweiter Antriebsmotor 34, der wie der erste Antriebsmotor 32 am Verbindungselement 24 angeordnet ist. Durch diese Anordnung des Antriebsmotors 34 entfallen sich bewegende Kabel und eine sog. Kabelschleppeinrichtung, wie sie bei einem zentralen ortsfesten Antrieb der Lanze 14 erforderlich wären. Unter Berücksichtigung der möglichen hohen Wärmebelastungen und der bei bewegten Kabeln auftretenden Biegebelastungen und Materialermüdungen ergibt sich bei der erfindungsgemäßen Vorrichtung eine Reduktion der Störanfälligkeit und des Wartungsaufwandes.

Zur Verbindung zwischen den Antriebsmotoren 32 und 34 und den zugehörigen Konstruktionsteilen zum Verschwenken der Lanze 14 um das Verbindungselement 24 bzw. zum Drehen der Lanze 14 um ihre Längsachse dienen Zahnriemen, Keilriemen, od. dgl., die in dieser Figur durch strichlierte Linien angedeutet und mit den Bezugsziffern 36 und 38 bezeichnet sind.

Das Verbindungselement 24 ist mit einer Halterung 40 durch ein zweites Gelenk 42 verbunden, das eine horizontale Achse 44 aufweist, die zur horizontalen Achse 28 parallel angeordnet ist und von dieser einen definierten Abstand aufweist. An der Halterung 40 ist ein dritter Antriebsmotor 46 angeordnet, mit dem das Verbindungselement 24 in Richtung des Doppelpfeiles 48 um die horizontale Achse 44 drehbar ist.

Im dargestellten Ausführungsbeispiel ist die Halterung als ortsfeste Säule ausgebildet. Selbstverständlich ist es auch möglich, daß die Halterung 40 entlang einer Führungseinrichtung linear und/oder um die vertikale Achse 50 herumgedreht werden kann.

In Figur 1 ist mit strichpunktierten Linien eine Endstellung der Lanze 14 dargestellt, in welcher das Verbindungselement 24 schräg nach oben weist, während die Lanze mit einem geeigneten Abtropfwinkel α, der gegen die Horizontale gemessen wird, mit der kugelförmigen Spitze 16 über der abschnittweise dargestellten Verarbeitungsstelle 52 angeordnet ist. Mit der Bezugsziffer 54 ist die von der kugelförmigen Spitze 16 der Lanze 14 abtropfende Glasmenge bezeichnet, die in der Verarbeitungsstelle 52 zu einem Glasgegenstand weiterverarbeitet wird.

Wie aus dieser Figur deutlich ersichtlich ist, befindet sich die Horizontalebene 56, in der sich die Spitze 16 der Lanze 14 während des Abtropfens befindet, über der Oberfläche 58 der Glasschmelze. Dies ist durch die beiden nebeneinander parallel verlaufenden dünnen strichpunktierten Linien 56 und 58 angedeutet.

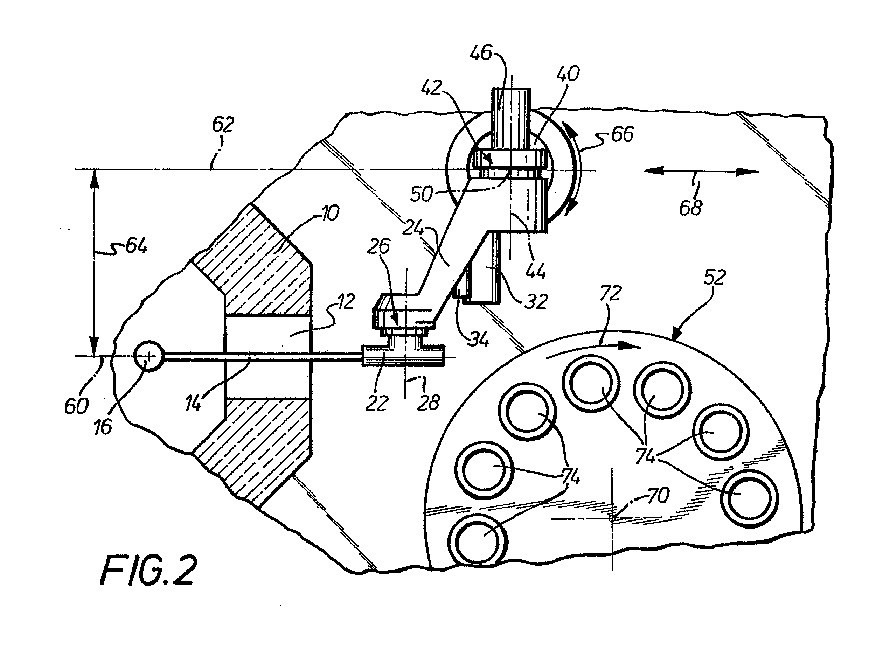

Figur 2 zeigt die abschnittweise dargestellte Wandung 10 des Glasschmelzofens, die ein Stichloch 12 aufweist. Durch das Stichloch 12 ragt die Lanze 14 mit ihrer kugelförmigen Spitze 16 in das Innere des Glasschmelzofens. Die Lanze 14 ist mit dem zur Spitze 16 entgegengesetzten Endabschnitt am Befestigungsteil 22 befestigt, das mit dem Verbindungselement 24 gelenkig verbunden ist. Das zwischen der Lanze 14 und dem Verbindungselement 24 vorgesehene Gelenk 26 weist eine horizontale Achse 28 auf, die in dieser Figur durch eine strichpunktierte Linie dargestellt ist.

Das Verbindungselement 24 ist an einer Halterung 40 gelenkig angeordnet, wobei dieses zweite Gelenk 42 zwischen der Halterung 40 und dem Verbindungselement 24 eine horizontale Achse 44 aufweist, die von der horizontalen Achse 28 einen Abstand besitzt und zu dieser parallel verläuft.

Wie aus Figur 2 deutlich ersichtlich ist, sind die beiden Gelenke 26 und 42 der Bewegungseinrichtung zur ungehinderten Ausführung einer Schwenkbewegung der Lanze 14 um die horizontale Achse 28 des ersten Gelenkes 26 und des Verbindungselementes 24 um das zweite Gelenk 42 in Richtung ihrer horizontalen Achsen 28 und 44 gegeneinander derart versetzt, daß die Lanze 14 in einer ersten vertikalen Ebene und das Verbindungselement in einer davon beabstandeten zweiten vertikalen Ebene verschwenkbar sind. Der der Versetzung der beiden Gelenke 26 und 42 entsprechende Abstand der beiden vertikalen Ebenen 60 und 62 ist durch den Pfeil 64 angedeutet. Mit den Bezugsziffern 32, 34 und 46 sind auch in dieser Figur die in Verbindung mit Figur 1 beschriebenen Antriebsmotoren bezeichnet. Durch den Doppelpfeil 66 ist in Figur 2 angedeutet, daß das Verbindungselement 24 mittels des dritten Antriebsmotors 46 um die vertikale Achse 50 der Halterung 40 verdrehbar ist. Der Doppelpfeil 68 deutet an, daß die Halterung 40 der Bewegungseinrichtung in Bezug zur Wandung 10 des Glasschmelzofens linear verschiebbar ist.

Mit der Bezugsziffer 52 ist eine Verarbeitungsstelle bezeichnet, bei der es sich beispielsweise um eine an sich bekannte Rundtisch-Presse handeln kann, die um eine vertikale Achse 70 eine schrittweise Drehbewegung ausführt. Diese schrittweise Drehbewegung ist durch den Pfeil 72 angedeutet. Auf dem scheibenförmigen Tisch der Rundtisch-Presse sind eine Anzahl Formen 74 angeordnet.

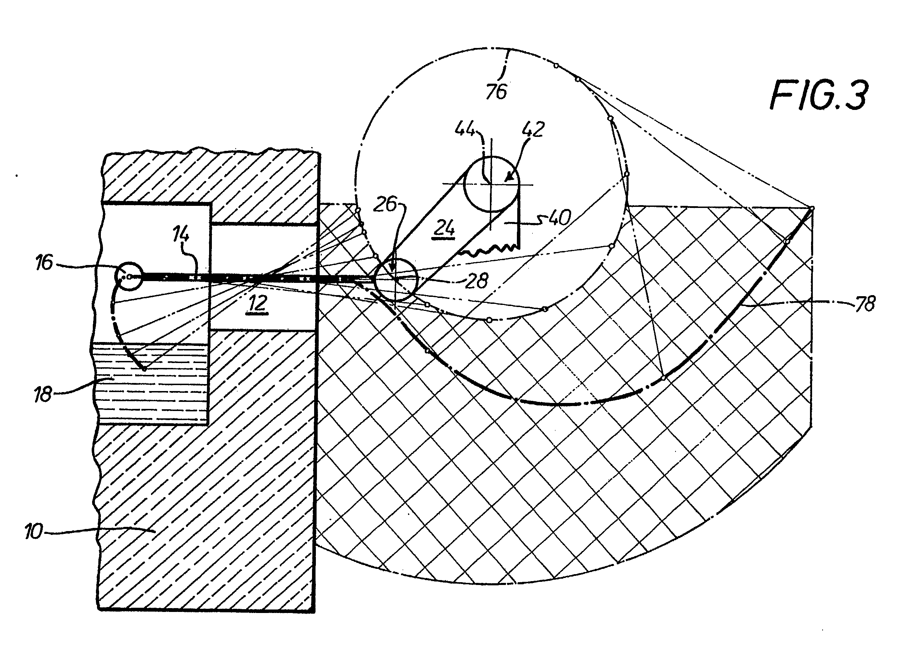

Figur 3 zeigt eine abschnittweise dargestellte Wandung 10 eines Glasschmelzofens mit der Glasschmelze 18 und dem Stichloch 12, durch das sich die Lanze 14 mit dem kugelförmigen Ende 16 in das Innere des Glasschmelzofens erstreckt. Mit der Bezugsziffer 26 ist das erste Gelenk zwischen der Lanze 14 und dem Verbindungselement 24, und mit der Bezugsziffer 42 ist das zweite Gelenk zwischen dem Verbindungselement 24 und der Halterung 40 bezeichnet. Das Gelenk 26 weist eine horizontale Achse 28 und das zweite Gelenk 42 weist eine horizontale Achse 44 auf. Die horizontale Achse 28 führt um die quasi ortsfeste horizontale Achse 44 eine kreisförmige Bahn aus, die in dieser Figur durch die strichpunktierte Linie 76 dargestellt ist. Durch geeignete Steuerung der Schwenkbewegung der Lanze 14 um die horizontale Achse 28 (s. Doppelpfeil 30 in Figur 1) führt die kugelförmige Spitze 16 während einer Drehung des Verbindungselementes 24 um die horizontale Achse 44 herum eine Bewegungsbahn aus, die in Figur 3 durch die dicke strichpunktierte Linie 78 angedeutet ist. In dieser Figur sind diverse Positionen der Lanze 14 mit dünnen Linien angedeutet. In dieser Figur ist auch der maximal mögliche Abtropfbereich der kugelförmigen Spitze 16 der Lanze 14 durch eine kreuzweise schraffierte Fläche schematisch angedeutet, wobei von einer orstfesten Halterung 40 ausgegangen wurde. Wenn die Halterung 40 eine lineare Bewegung auszuführen in der Lage ist (s. Doppelpfeil 68 in Figur 2), dann vergrößert sich der Abtropfbereich um das Maß der linearen Verschiebbarkeit der Halterung 40.

Mit der erfindungsgemäßen Vorrichtung wird der Vorteil erzielt, daß mit einer auf zwei Schwenkachsen 28 und 44 reduzierten Vorrichtung ein großer Arbeitsbereich gegeben ist, d.h. mit der Lanze 14 überstrichen werden kann, der in der vertikalen Ebene 60 liegt, der in der vertikalen Ebene 60 durch die mögliche zusätzliche Bewegung entlang des Doppelpfeils 68 (s. Fig. 2) vergrößerbar ist, und der wahlweise außerdem durch eine mögliche zusätzliche Beweglichkeit der Vorrichtung entlang des Doppelpfeiles 66 (s. Fig. 2) seitlich um die Ebene 60 herum räumlich ausgedehnt werden kann. Dabei nimmt die Lanze 14 jederzeit eine schräg nach unten weisende Stellung ein, so daß das mit der kugelförmigen Spitze 16 der Lanze 14 aus der Schmelze 18 heraustransportierte Glas problemlos an einer Verarbeitungsstelle abgetropft wird.

## Patentansprüche

1. Vorrichtung zur Entnahme von geschmolzenem Glas aus einer Schmelze, die durch eine Wandung mit einem Stichloch (12) von einer Verarbeitungsstelle getrennt ist, und zum Transport des geschmolzenen Glases zur Verarbeitungsstelle, mit einer durch das Stichloch bewegbaren und mit Ihrem Vorderende in die Schmelze eintauchbaren Lanze (14), die über ein erstes Gelenk (26) an einem Verbindungselement (24) einer Bewegungseinrichtung angeordnet ist, wobei das Verbindungselement (24) mit einem vom ersten Gelenk (26) beabstandeten zweiten Gelenk (42) an der Bewegungseinrichtung gelagert ist und die beiden Gelenke (26, 42) parallele horizontale Achsen (28, 44) aufweisen, dadurch gekennzeichnet, daß die beiden Gelenke ( 26, 42) der Bewegungseinrichtung zur ungehinderten Ausführung einer Schwenkbewegung der Lanze (14) um die horizontale Achse (28) des ersten Gelenkes (26) und des Verbindungselementes (24) um das zweite Gelenk (42) in Richtung ihrer horizontalen Achsen (28, 44) gegeneinander derart versetzt sind, daß die Lanze (14) in einer ersten vertikalen Ebene (60) und das Verbindungselement (24) in einer davon beabstandeten zweiten vertikalen Ebene (62) verschwenkbar sind, wobei das zweite Gelenk (42) an einer Halterung (40) vor und über oder unter dem in der Wandung (10) vorgesehenen Stichloch (12) angeordnet ist, daß zum Verschwenken der Lanze (14) relativ zum Verbindungselement (24) ein Antriebsmotor (32) dient, der am Verbindungselement (24) angeordnet ist, und daß zum Verschwenken des Verbindungselementes (24) relativ zur Halterung (40) an der Halterung ein zweiter Antriebsmotor (46) vorgesehen ist.

2. Vorrichtung nach Anspruch 1, dadurch gekennzeichnet, daß die Halterung (40) ortsfest angeordnet ist.

3. Vorrichtung nach Anspruch 1, dadurch gekennzeichnet, daß die Halterung (40) gegenüber dem Stichloch (12) verschiebbar ist.

4. Vorrichtung nach Anspruch 1, dadurch gekennzeichnet, daß die Halterung (40) um eine vertikale Achse (50) drehbar ist.

5. Vorrichtung nach einem der vorhergehenden Ansprüche, dadurch gekennzeichnet, daß zum Drehen der Lanze (14) um ihre Längsachse ein dritter Antriebsmotor (34) dient, der am Verbindungselement (24) angeordnet ist.

## Claims

1. Apparatus for the removal of molten glass from a melt, which is separated by a wall with a taphole (12) from a working point, and for the transporting of the molten glass to the working point, having a lance (14), which can move through the taphole and enter with its front end into the melt, and is arranged via a first joint (26) on a connecting element (24) of a movement device, the connecting element (24) being mounted on the movement device by a second joint (42) at a distance from the first joint (26), and the two joints (26, 42) having parallel horizontal axes (28, 44), characterized in that the two joints (26, 42) of the movement device are offset with respect to each other for the unhindered execution of a pivoting movement of the lance (14) about the horizontal axis (28) of the first joint (26) and of the connecting element (24) about the second joint (42) in the direction of their horizontal axes (28, 44), in that the lance (14) is pivotal in a first vertical plane (60) and the connecting element (24) is pivotal in a second vertical plane (62) at a distance therefrom, the second joint (42) being arranged on a mount (40) in front of and above or below the taphole (12) provided in the wall (10), in that a drive motor (32), which is arranged on the connecting element (24), serves the pivoting of the lance (14) relative to the connecting element (24), and in that a second drive motor (46) is provided on the mount for the pivoting of the connecting element (24) relative to the mount (40).

2. Apparatus according to Claim 1, characterized in that the mount (40) is fixedly arranged.

3. Apparatus according to Claim 1, characterized in that the mount (40) is displaceable with respect to the taphole (12).

4. Apparatus according to Claim 1, characterized in that the mount (40) is rotatable about a vertical axis (50).

5. Apparatus according to one of the preceding claims, characterized in that a third drive motor (34), which is arranged on the connecting element (24), serves the rotating of the lance (14) about its longitudinal axis.

## Revendications

1. Appareil cueilleur de verre fondu d'un bain de fusion qui est séparé, par une paroi avec un trou de coulée (12), d'une station de traitement, et avec une lance (14) pour le transport du verre fondu à la station de traitement, mobile à travers le trou de coulée et pouvant être immergée, par son extrémité avant, dans le bain de fusion, laquelle est disposée, par une première articulation (26), sur un élément de jonction (24) d'un système de déplacement, l'élément de jonction (24) étant logé par une seconde articulation (42) à une distance de la première articulation (26), sur le système de déplacement et les deux articulations (26, 42), présentant des axes parallèles horizontaux (28, 44), caractérisé en ce que les deux articulations (26, 42) du système de déplacement sont décalées, pour la réalisation sans empêchement d'un mouvement de pivotement de la lance (14) autour de l'axe horizontal (28) de la première articulation (26) et de l'élément de jonction (24) autour de la seconde articulation (42) dans la direction de leurs axes horizontaux (28, 44), mutuellement, de manière que la lance (14) puisse pivoter dans un premier plan vertical (60) et que l'élément de jonction (24) puisse pivoter dans un second plan vertical (62) qui en est éloigné, la seconde articulation (42) étant disposée sur une fixation (40) devant et au-dessus ou en dessous du trou de coulée (12) prévu dans la paroi (10), en ce que pour le pivotement de la lance (14) relativement à l'élément de jonction (24), on utilise un moteur d'entraînement (32), qui est disposé sur l'élément de jonction (24), et en ce que pour le pivotement de l'élément de jonction (24) relativement à la fixation (40), un second moteur d'entraînement (46) est prévu sur la fixation.

2. Appareil selon la revendication 1, caractérisé en ce que la fixation (40) est disposée stationnaire.

3. Appareil selon la revendication 1, caractérisé en ce que la fixation (40) est mobile vis-à-vis du trou de coulée (12).

4. Appareil selon la revendication 1, caractérisé en ce que la fixation (40) est rotative autour d'un axe vertical (50).

5. Appareil selon l'une quelconque des revendications précédentes, caractérisé en ce que pour la rotation de la lance (14) autour de son axe longitudinal, on utilise un troisième moteur d'entraînement (34), qui est disposé sur l'élément de jonction (24).

FIG.1

EP 0 241 740 B1

FIG.2

FIG.3

EP 0 241 740 B1